# FASCICULE DE BREVET EUROPEEN

(11) **EP 3 987 208 B1**
(45) Date de publication et mention de la délivrance du brevet: **30.08.2023**
(21) Numéro de dépôt: 20733802.1
(22) Date de dépôt: 19.06.2020
(51) Int. Cl.: F16L 11/08, F16L 11/16

(54) **CONDUITE FLEXIBLE DE TRANSPORT DE FLUIDE COMPORTANT UN INSERT HÉLICOÏDAL, ET PROCÉDÉ ASSOCIÉ**
FLEXIBLES ROHR ZUM TRANSPORT VON FLÜSSIGKEIT MIT EINEM SCHRAUBENFÖRMIGEN EINSATZ SOWIE ZUGEHÖRIGES VERFAHREN
FLEXIBLE PIPE FOR TRANSPORTING FLUID, COMPRISING A HELICAL INSERT, AND ASSOCIATED METHOD

(30) Priorité: 21.06.2019 FR 1906720
(43) Date de publication de la demande: 27.04.2022
(73) Titulaire: TechnipFMC Subsea France, 92400 Courbevoie (FR)
(72) Inventeur: PHELUT, Renaud, 76480 DUCLAIR (FR)
(74) Mandataire: Lavoix
(86) Numéro de dépôt international: PCT/EP2020/067128
(87) Numéro de publication internationale: WO 2020/254595

(56) Documents cités:
- EP-A1- 3 502 535
- FR-A1- 3 017 438
- US-A1- 2015 040 633

## Description

La présente invention concerne une conduite flexible de transport de fluide selon le préambule de la revendication 1.

US 2015/040633 décrit un insert de carcasse de conduite flexible ayant une région extérieure radiale insérée dans un interstice de la carcasse.

La conduite flexible est par exemple telle que décrite dans les documents normatifs publiés par l'American Petroleum Institute (API), API 17J, 4ème édition - mai 2014 et API RP 17B, 5ème édition - mars 2014.

De telles conduites flexibles sont par exemple utilisées comme lignes de production, notamment en mer profonde dans l'industrie pétrolière et gazière. Elles s'étendent généralement à travers une étendue d'eau entre une installation de surface et un ensemble de fond ou entre deux ensembles de fond. Ces lignes peuvent également s'étendre entre deux installations de surface. L'installation de surface est par exemple une barge, une plateforme semi-submersible, un FPSO (pour « Floating Production Storage and Offloading », soit ensemble de stockage et de déchargement de production flottant), un FLNG (pour « Floating Liquefied Natural Gas », soit ensemble de liquéfaction de Igaz naturel flottant), un FSU (pour « Floating Storage Unit », soit unité de stockage flottant), ou un autre ensemble flottant.

Dans certains cas, la conduite flexible comprend une carcasse interne disposée dans la gaine de pression. La carcasse interne évite l'écrasement de la gaine de pression, sous l'effet de la pression externe, par exemple lors d'une dépressurisation du passage interne de circulation de fluide délimité par la gaine de pression.

La carcasse interne est généralement formée d'un feuillard métallique profilé, enroulé en spirale. Les spires du feuillard sont agrafées les unes aux autres. Les spires délimitent entre elles un interstice hélicoïdal débouchant radialement vers l'intérieur dans le passage central de circulation du fluide.

La surface interne de la carcasse présente donc axialement une succession de creux. La conduite est alors généralement qualifiée par le terme anglais « rough bore ».

Dans certains cas, la circulation du fluide le long de la carcasse est perturbée par les reliefs définis sur la carcasse par l'interstice hélicoïdal.

Cette perturbation de l'écoulement est parfois considérée comme l'origine de phénomènes de vibrations au sein de la conduite flexible et du fluide transporté, voire, lorsqu'une résonance est atteinte, de pulsations induites par la circulation de fluide (« flow induced pulsations » ou « singing » en anglais).

Pour pallier ce problème, il est connu de fabriquer des conduites flexibles dépourvues de carcasse interne et présentant donc une surface lisse (« smooth bore » en anglais). Cependant, ces conduites sont susceptibles de subir une déformation ou un écrasement en cas de dépressurisation.

Une autre solution à ce problème est décrite dans WO 2015/121424. Dans ce document, la conduite flexible comprend une carcasse dans laquelle un insert hélicoïdal de section en forme de S étendu est disposé dans l'interstice présent entre les différentes spires de la carcasse. L'insert bouche l'interstice vers l'intérieur.

L'insert est donc particulièrement efficace pour limiter les phénomènes de pulsations induites.

Le profil en forme de S étendu est fabriqué de manière très simple par déformation d'un feuillard sur des profils adaptés. Puis, le feuillard déformé est enroulé conjointement avec celui formant la carcasse.

Un tel insert peut encore être amélioré. Durant le spiralage de la carcasse, un léger flambage de la région axiale intérieure de l'insert est parfois observé. Dans certains cas, ce flambage tend à créer des dépressions oblongues ponctuelles localisées dans la surface interne de l'insert, en regard de l'interstice hélicoïdal.

Ces dépressions sont susceptibles de provoquer une perturbation de l'écoulement lors de la circulation de fluide, pouvant engendrer des vibrations.

Un but de l'invention est donc de fournir une conduite dans laquelle le risque de perturbations d'écoulement, voire de vibrations est encore réduit, et qui reste néanmoins simple et économique à fabriquer à l'échelle industrielle.

À cet effet, l'invention a pour objet une conduite selon la revendication 1.

La conduite selon l'invention peut comprendre l'une ou plusieurs des caractéristiques des revendications 2 à 11 ou l'une des caractéristiques suivantes, prise(s) isolément ou suivant toute combinaison techniquement possible:
- en section dans le plan axial médian, chaque spire de l'insert définit une ligne continue sans branchement ;
- le tronçon intérieur puis le tronçon intermédiaire s'écartent continûment de l'axe central depuis la région axiale jusqu'au tronçon extérieur ;
- les projections du bord libre intérieur et du bord libre extérieur sur l'axe central sont situées aux extrémités de la projection de l'insert sur l'axe central ;
- le bord libre extérieur est plus éloigné de l'axe central que le bord libre intérieur ;
- la carcasse comporte une pluralité de spires agrafées, chaque spire de la carcasse présentant en section dans le plan axial médian une partie intérieure, une partie intermédiaire, la partie intérieure présentant une forme de U replié vers la partie intermédiaire et une partie extérieure, la partie extérieure présentant une forme de U replié vers la partie intermédiaire, la branche extérieure du U de la partie intérieure d'une spire étant en contact direct avec la branche extérieure du U de la partie extérieure d'une spire adjacente, l'interstice étant fermé latéralement d'un côté par ce contact.

L'invention a aussi pour objet un procédé de fabrication selon la revendication 12.

Le procédé selon l'invention peut comprendre les caractéristiques de la revendication 13 ou/et l'une ou plusieurs des caractéristiques suivantes, prise(s) isolément ou suivant toute combinaison techniquement possible:
- en section dans le plan axial médian, la région intérieure axiale s'étend suivant une courbe continûment dérivable depuis la région radiale jusqu'au bord libre intérieur de l'insert hélicoïdal ;
- le profil d'insert est de section en forme de L.

L'invention sera mieux comprise à la lecture de la description qui va suivre, donnée uniquement à titre d'exemple, et faite en se référant aux dessins annexés, sur lesquels :
- [Fig.1] la figure 1 est une vue en perspective partiellement écorchée d'un tronçon central d'une première conduite flexible selon l'invention ;
- [Fig.2] la figure 2 est une vue partielle, prise en coupe suivant un plan axial médian, d'un détail de la conduite de la figure 1 illustrant la carcasse et l'insert disposé dans l'interstice de la carcasse ;
- [Fig.3] la figure 3 est une vue d'un détail de la figure 2, illustrant une section en L de l'insert;
- [Fig.4] la figure 4 est une vue schématique d'un exemple de poste de fabrication et de pose de la carcasse et de l'insert ;
- [Fig.5] la figure 5 est une vue schématique d'un autre exemple de poste de fabrication et de pose de la carcasse et de l'insert ;
- [Fig.6] la figure 6 est une vue analogue à la figure 2 d'une variante de conduite flexible selon l'invention.

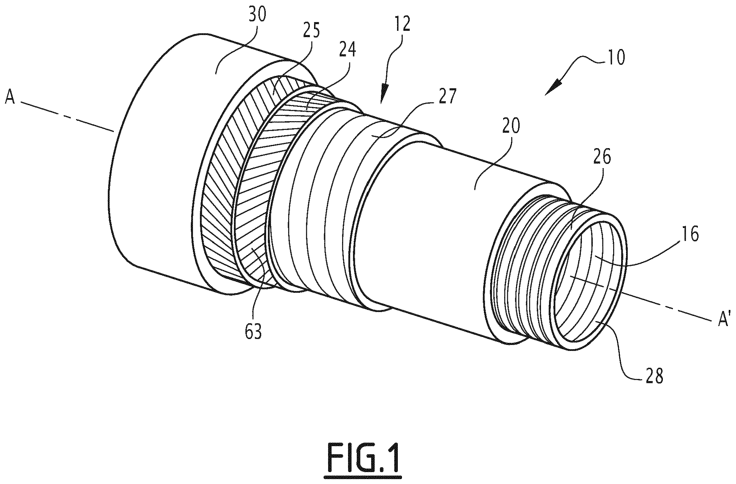

Une première conduite flexible 10 selon l'invention est illustrée partiellement par la figure 1.

La conduite flexible 10 comporte un tronçon central 12. Elle comporte, à chacune des extrémités axiales du tronçon central 12, un embout d'extrémité (non visible).

En référence à la figure 1, la conduite 10 délimite un passage central 16 de circulation d'un fluide, avantageusement d'un fluide pétrolier. Le passage central 16 s'étend suivant un axe central A-A', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 4000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre.

Une telle conduite est par exemple décrite dans les documents normatifs publiés par l'American Petroleum Institute (API), API 17J, 4ème édition - mai 2014 et API RP 17B, 5ème édition - mars 2014.

Par ailleurs, dans tout ce qui suit, les termes « extérieur » et « intérieur » s'entendent généralement de manière radiale par rapport à l'axe central A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

Selon l'invention, la conduite 10 comporte au moins une première gaine tubulaire 20 à base de matériau polymère constituant avantageusement une gaine de pression.

La conduite 10 comporte en outre au moins une couche d'armures de traction 24, 25 disposée extérieurement par rapport à la première gaine 20 formant une gaine de pression.

La conduite 10 comporte en outre une carcasse interne 26 disposée à l'intérieur de la gaine de pression 20, éventuellement une voûte de pression 27 intercalée entre la gaine de pression 20 et la ou les couches d'armures de traction 24, 25, et une gaine externe 30, destinée à la protection de la conduite 10.

La conduite 10 comporte en outre un insert 28 qui dans cet exemple présente une section transversale en forme de L, l'insert 28 étant disposé en appui intérieur sur la carcasse interne 26.

De manière connue, la gaine de pression 20 est destinée à confiner de manière étanche le fluide transporté dans le passage 16. La gaine de pression 20 est avantageusement formée en matériau polymère, par exemple à base d'une polyoléfine telle que du polyéthylène ou du polypropylène, à base d'un polyamide tel que du PA11 ou du PA12, ou à base d'un polymère fluoré tel que du polyfluorure de vinylidène (PVDF).

En variante, la gaine de pression 20 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges.

L'épaisseur de la gaine de pression 20 est par exemple comprise entre 5 mm et 20 mm.

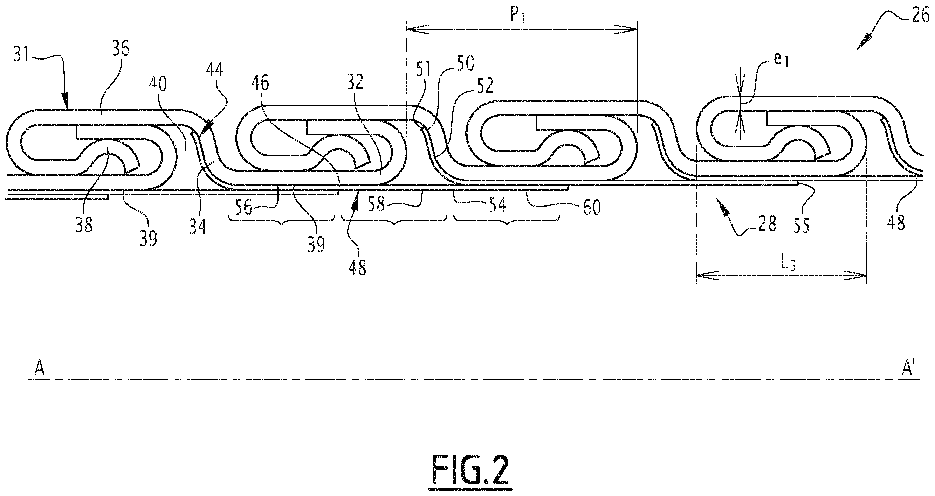

Comme illustré par la figure 2, la carcasse 26 est formée ici d'un premier feuillard 31 métallique profilé, enroulé en hélice. Les spires successives du feuillard 31 sont agrafées les unes aux autres.

La fonction principale de la carcasse 26 est de reprendre les efforts radiaux d'écrasement. Les efforts radiaux d'écrasement sont par exemple la pression hydrostatique de l'étendue d'eau.

La carcasse 26 est disposée à l'intérieur de la gaine de pression 20. Elle est propre à entrer en contact avec le fluide circulant dans la gaine de pression 20.

Le premier feuillard 31 est avantageusement en acier, par exemple en acier au carbone, choisi notamment parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

Le premier feuillard 31 est par exemple constitué :
- en acier inoxydable austénitique choisi par exemple parmi les grades AISI 304 (UNS S30400), AISI 304L (UNS S30403), AISI 316 (UNS S31600) et AISI 316L (UNS S31603) ou
- en acier inoxydable super austénitique choisi par exemple parmi les grades 904L (UNS NO8904), le 254SMo (UNS S31254), le 654 SMo (UNS S32654), le 4565 (UNS S32565, le 25-6Mo (UNS NO8925), le AL6XN^{®} (UNS NO8367) ou le Cronifer^{®}1925hMo (UNS NO8926) ou le Nicrofer^{®} 3127 hMo (UNS NO8031) ou l'acier 20 Mo6HS (UNS NO8036) ou l'acier 1.4565H (UNS S34656)
- en acier duplex tel que le grade 2205 (UNS S31803) ou le grade UNS S82441 (EN 1.4662) ou le duplex 2205 H (UNS S32205 / EN 1.4462) ou duplex 2507 H (UNS S32507 / EN 1.4410) ou
- en acier super duplex à 25% de chrome tel que le grade SAF 2507 (UNS S32750) ou
- en acier hyper duplex à 29% de chrome ou
- en alliage base nickel tel que l'alliage 825 (UNS NO8825), l'inconel^{®} 625 (UNS NO6625), l'Hastelloy C22^{®} (UNS NO6022), le C-276 (UNSNO10276) et le Nicrofer^{®}5923hMo (UNS NO6059) ou
- en acier appauvri en nickel (« lean duplex » en anglais) tel que le grade 2101 (UNS S32101).

L'enroulement hélicoïdal du premier feuillard 31 profilé formant la carcasse 26 est à pas court, c'est-à-dire qu'il présente un angle d'hélice de valeur absolue proche de 90°, typiquement compris entre 75° et 90°.

Le premier feuillard 31 présente deux bords repliés longitudinalement sur une région centrale. Il définit une pluralité de spires agrafées de section en forme de S refermé et aplati, telle qu'illustrées par la Figure 2. Le premier feuillard 31 présente une épaisseur e1 sensiblement constante.

La section en S refermé de chaque spire de la carcasse 26 comprend successivement, parallèlement à l'axe A-A' de droite à gauche sur la figure 2, une partie intérieure 32 en forme générale de U, une partie intermédiaire inclinée 34 et une partie extérieure 36 en forme générale de U présentant, au voisinage de son extrémité libre, une onde d'appui 38, communément désignée par le terme « téton » ou « crochet » ou « gorge de joint » dans le domaine technique de l'invention.

La partie intérieure 32 de chaque spire du premier feuillard 31 est repliée vers la partie intermédiaire 34 à l'écart de l'axe central A-A', extérieurement par rapport à la partie inclinée 34. Elle définit une section en U s'étendant parallèlement à l'axe A-A' et s'ouvrant en regard de la partie inclinée 34.

La partie extérieure 36 d'une spire adjacente est partiellement engagée dans la partie intérieure 32, l'onde d'appui 38 étant intercalée entre les branches du U.

La partie intérieure 32 définit une surface intérieure 39 située sur une enveloppe cylindrique d'axe A-A'.

La partie extérieure 36 définit également une section en U s'étendant parallèlement à l'axe A-A' et s'ouvrant en regard de la partie inclinée 34.

La partie extérieure 36 de chaque spire est repliée vers la partie intermédiaire 34, vers l'axe central A-A', intérieurement par rapport à la partie inclinée 34. La partie extérieure 36 et l'onde d'appui 38 de la section sont reçues dans la partie intérieure 32 d'une section adjacente, et recouvrent partiellement vers l'extérieur la partie intérieure 32 de la section adjacente.

Pour chaque spire, la partie intermédiaire 34, la partie extérieure 36 et la partie intérieure 32 d'une section adjacente délimitent un interstice intérieur 40, définissant partiellement ou totalement le jeu axial de la carcasse 26.

L'interstice 40 débouche radialement vers l'axe central A-A'. Pour chaque spire, il s'ouvre intérieurement vers l'axe A-A' entre les surfaces intérieures 39 des parties intérieures 32 de deux spires adjacentes.

Il est obturé extérieurement par la partie extérieure 36 et latéralement par la partie intermédiaire 34 d'une spire et par la partie intérieure 32 d'une spire adjacente.

L'interstice 40 s'étend ainsi continûment en forme d'hélice d'axe A-A' suivant un pas P1 le long de la carcasse 26.

La branche extérieure du U de la partie intérieure 32 d'une spire est en contact direct avec la branche extérieure du U de la partie extérieure 36 d'une spire adjacente. L'interstice 40 est donc fermé latéralement d'un côté par ce contact.

Chaque spire de la carcasse 26 présente une largeur avantageusement comprise entre 5 mm et 100 mm et préférentiellement comprise entre 5 mm et 50 mm.

La carcasse 26 présente, entre chaque paire de spires agrafées, un premier jeu axial défini par la course axiale de coulissement relatif de la partie extérieure 36 d'une spire dans la partie intérieure 32 d'une spire adjacente dans laquelle elle est engagée.

Selon l'invention, l'insert 28 est disposé partiellement dans l'interstice 40 et obture l'interstice 40 vers l'axe A-A'.

L'insert 28 présente ainsi avantageusement une forme hélicoïdale d'axe A-A', de pas P1 analogue au pas de l'interstice 40.

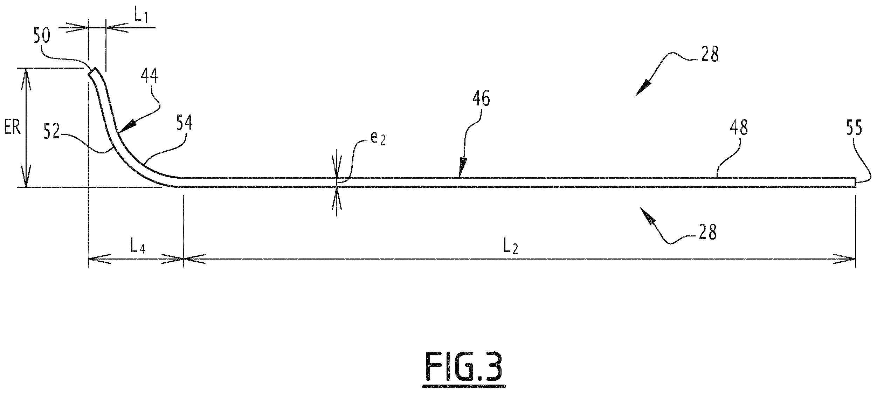

Dans l'exemple illustré par la figure 3, l'insert 28 présente une section, prise dans un plan axial médian, en forme générale de L.

Il comporte une région extérieure radiale 44 d'ancrage dans l'interstice 40 et une région intérieure axiale 46 faisant saillie à partir de la région radiale 44.

La région intérieure axiale 46 obture au moins partiellement l'interstice 40. Avantageusement, la région intérieure axiale 46 obture totalement l'interstice 40.

Selon l'invention, l'insert 28 est réalisé d'un seul tenant par pliage d'un deuxième feuillard 48.

Le deuxième feuillard 48 est en acier, par exemple en acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

Le deuxième feuillard 48 est par exemple constitué d'un des aciers décrits plus haut pour le premier feuillard 31.

Le deuxième feuillard 48 présente avantageusement une épaisseur e2 constante. L'épaisseur e2 du deuxième feuillard 48 est de préférence inférieure à l'épaisseur e1 du premier feuillard 31.

L'épaisseur e2 du deuxième feuillard 48 est avantageusement comprise entre un cinquième et deux tiers de l'épaisseur e1 du premier feuillard 31.

L'épaisseur e2 est par exemple comprise entre 0,3 mm et 2 mm, notamment entre 0,8 mm et 1,5 mm.

Une telle épaisseur garantit une raideur suffisante, tout en limitant le risque de désorganisation de l'ensemble formé par la carcasse et l'insert lors de l'introduction d'une sonde dans le passage central (« pigging » en anglais).

Comme illustré par la figure 3, la région radiale 44 comprend dans cet exemple un tronçon extérieur 50 recourbé. Elle comprend un tronçon intermédiaire 52 linéaire, et un tronçon intérieur 54 recourbé de liaison avec la région intérieure 46.

Le tronçon extérieur 50 définit ici le bord libre extérieur 51 de l'insert 28 qui est disposé dans l'interstice hélicoïdal 40.

Le tronçon extérieur 50, lorsqu'il est présent, présente une courbure de convexité dirigée vers l'extérieur. Le rayon de courbure du tronçon extérieur 50 est supérieur avantageusement à l'épaisseur e2 du deuxième feuillard 48.

Le tronçon extérieur 50 fait saillie axialement par rapport au tronçon intermédiaire 52, à l'opposé de la région intérieure axiale 46.

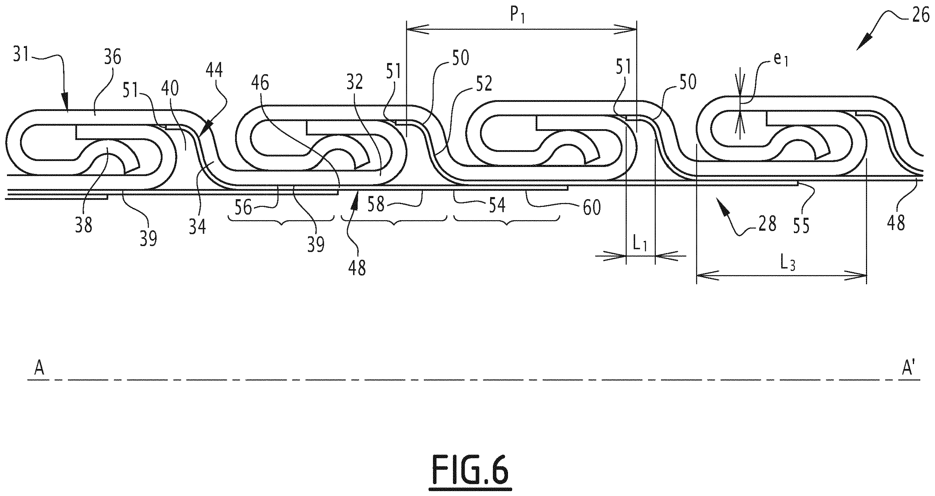

La longueur L1 du tronçon extérieur 50, prise en projection sur l'axe A-A', est très faible dans l'exemple de la figure 2. Elle reste faible dans l'exemple de la figure 6.

Cette longueur L1 est par exemple inférieure à 20 %, notamment inférieure à 10 % avantageusement inférieure à 5% de la longueur L2 de la région intérieure axiale 46, prise en projection sur l'axe A-A'.

En outre, la longueur L1 du tronçon extérieur 50, prise en projection sur l'axe A-A' est inférieure ou égale à 40% de la partie extérieure 36 de la carcasse 26.

En outre, la longueur L1 du tronçon extérieur 50, prise en projection sur l'axe A-A' est inférieure ou égale à 40% de la partie extérieure 36 de la carcasse 26.

Avantageusement, l'insert 28 et notamment son bord libre extérieur 51, en particulier la région radiale 44 et le tronçon extérieur 50 lorsqu'il est présent, sont libres de se déplacer dans l'interstice 40 de la carcasse.

L'insert hélicoïdal 28 est en outre apte à être désengagé de la carcasse 26, sans interférence avec l'agrafage des spires de la carcasse 26.

Le bord libre extérieur 51 et plus généralement tout le tronçon extérieur 50 sont situés dans l'interstice 40, et ne sont donc pas engagés entre la branche extérieure du U de la partie intérieure 32 d'une section de la carcasse 26 et la branche extérieure du U de la partie extérieure 36 d'une section adjacente de la carcasse 26.

L'insert 28 est libre de se déplacer axialement et radialement dans l'interstice 40 de la carcasse 26.

Ceci est contraire à l'insert en S de l'art antérieur dont le bord libre extérieur est fixé entre les branches de spires adjacentes de la carcasse.

Ainsi, l'effort de compression s'exerçant sur la région intérieure axiale 46 de l'insert 28 est réduit et son flambement durant l'enroulement de la carcasse 26 est limité.

La faible longueur L1 permet un tel arrangement dans lequel l'insert 28 peut se déplacer au sein du jeu 40 de la carcasse.

Le tronçon intermédiaire 52 s'étend de manière inclinée par rapport à un axe perpendiculaire à l'axe central A-A' en étant situé axialement à l'écart de la région intérieure 46.

Le tronçon intérieur 54 présente une courbure de convexité dirigée vers l'intérieur, à l'opposé de la convexité de la courbure du tronçon extérieur 50. Il présente un rayon de courbure supérieur de rayon de courbure du tronçon extérieur 50. Alternativement, le tronçon intermédiaire 52 s'étend de manière parallèle par rapport à un axe perpendiculaire à l'axe central A-A'.

La région radiale 44 est disposée dans l'interstice 40 entre la partie intermédiaire 34 et la partie extérieure 36 d'une spire de la carcasse 26, et la partie intérieure 32 d'une spire adjacente de la carcasse 26.

La région intérieure 46 fait saillie axialement à partir du tronçon intérieur 54 de la région radiale 44.

La région intérieure 46 s'étend axialement le long de l'axe A-A', sur une enveloppe cylindrique d'axe A-A' ou avec un angle inférieur à 10° par rapport à cette enveloppe et préférentiellement compris entre 1° et 2,5°. Sa section dans un plan axial médian s'étend linéairement depuis le tronçon intérieur 54 jusqu'à son bord libre 55.

En section dans un plan axial médian, la région intérieure 46 s'étend de préférence suivant une courbe continûment dérivable depuis le tronçon intérieur 54 jusqu'à son bord libre 55, constituant le bord libre intérieur 55 de l'insert 28.

La longueur L2 de la région intérieure 46, prise en projection sur l'axe A-A' est supérieure à la longueur L4 de la région radiale 44, prise en projection sur l'axe A-A'. De préférence, la longueur L2 est supérieure à 3 fois, notamment à 4 fois la longueur L4 et préférentiellement supérieure à 6 fois la longueur L4.

En outre, la longueur L2 de la région intérieure 46, prise le long de l'axe A-A' est supérieure à la longueur L3 de la partie interne 32, prise le long de l'axe A-A'.

L'étendue radiale ER de la région radiale 44, prise perpendiculairement à l'axe A-A', est inférieure à la longueur de la région intérieure axiale 46, prise en projection le long de l'axe central A-A', notamment est inférieure à 50% de la longueur de la région intérieure axiale 46, prise en projection le long de l'axe A-A'. Préférentiellement, la longueur L2 de la région intérieure axiale 46, prise en projection sur l'axe A-A' est égale ou supérieure à 5 fois l'étendue radiale ER de la région radiale 44 prise perpendiculairement à l'axe A-A'.

L'étendue radiale ER de la région radiale 44 est avantageusement supérieure ou égale à 4 fois l'épaisseur e1 du premier feuillard 31.

En référence à la figure 2, la région intérieure 46 de chaque spire de l'insert 28 comporte un premier tronçon axial 56 plaqué sur la surface intérieure 39 de la partie intérieure 32 d'une spire de la carcasse 26, un tronçon intermédiaire axial 58 obturant vers l'intérieur l'interstice 40 délimité par la partie intérieure 32, et un deuxième tronçon axial 60 plaqué sur une surface intérieure de la région intérieure 46 d'une spire adjacente de l'insert 28, au niveau du premier tronçon axial 56 de cette région intérieure 46.

La région intérieure 46 de chaque spire de l'insert 28 est avantageusement maintenue plaquée contre la surface intérieure de la région intérieure 46 d'une spire de l'insert 28, par le retour élastique de la région intérieur 46 résultant du spiralage de la carcasse 26.

Ainsi, les spires successives de l'insert 28 se recouvrent les unes les autres par leurs régions intérieures 46, afin d'obturer l'interstice 40 vers l'intérieur.

La largeur de recouvrement de chaque région intérieure 46, lorsque la carcasse 26 occupe une configuration linéaire non déformée est supérieure au jeu axial de la carcasse 26.

L'ensemble intérieur formé par la carcasse 26 et l'insert 28 est perméable au passage de fluide. Ceci permet l'équilibrage des pressions de part et d'autre de cet ensemble. Une telle configuration est donc totalement opposée à celle d'un tuyau métallique totalement étanche tel que décrit dans US 2002/195157 qui vise à contenir un fluide à l'intérieur du tuyau sans fuite de fluide.

En référence à la figure 1, la voûte de pression 27 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

Le matériau métallique formant le fil profilé 25 est choisi parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

La voûte de pression 27 est enroulée en hélice à pas court autour de la gaine de pression 20, c'est-à-dire avec un angle d'hélice de valeur absolue proche de 90°, typiquement compris entre 75° et 90°.

La conduite flexible 10 comprend optionnellement une frette (non représentée).

La frette, lorsqu'elle est présente, est constituée par un enroulement en spirale d'au moins un fil avantageusement de section transversale rectangulaire autour de la voûte de pression 27. La superposition de plusieurs fils enroulés autour de la voûte de pression 27 peut avantageusement remplacer une épaisseur totale de frette donnée. Ceci augmente la résistance à l'éclatement de la conduite flexible 10. L'enroulement du au moins un fil est à pas court autour de l'axe A-A' de la conduite flexible 10, c'est-à-dire avec un angle d'hélice de valeur absolue proche de 90°, typiquement compris entre 75° et 90°.

Dans une variante de réalisation de l'invention, la voûte de pression 27 et la frette sont remplacées par une voûte de pression 27 d'épaisseur plus importante formée à partir d'un fil profilé en métal présentant une géométrie en forme de T, de U, de K, de X ou de I, et/ou à partir d'au moins une bande en aramide à résistance mécanique élevée (Technora^{®} ou Kevlar^{®}), et/ou à partir d'au moins une bande composite comprenant une matrice thermoplastique dans laquelle sont noyées des fibres de carbone ou des fibres de verre.

La conduite flexible 10 selon l'invention comprend au moins une couche d'armures 24, 25 formée d'un enroulement hélicoïdal d'au moins un élément d'armure 63 allongé.

Dans l'exemple représenté sur la figure 1, la conduite flexible 10 comporte une pluralité de couches d'armures 24, 25, notamment une couche d'armures intérieure 24, appliquée sur la voûte de pression 27 et une couche d'armures extérieure 25 autour de laquelle est disposée la gaine extérieure 30.

Chaque couche d'armures 24, 25 comporte des éléments d'armure 63 longitudinaux enroulés à pas long autour de l'axe A-A' de la conduite.

Par « enroulé à pas long », on entend que la valeur absolue de l'angle d'hélice est inférieure à 60°, et est typiquement comprise entre 10° et 60°, notamment entre 25° et 55°.

Les éléments d'armure 63 d'une première couche 24 sont enroulés généralement suivant un angle opposé par rapport aux éléments d'armure 63 d'une deuxième couche 25. Ainsi, si l'angle d'enroulement des éléments d'armure 63 de la première couche 24 est égal à + α, α étant compris entre 10° et 60°, l'angle d'enroulement des éléments d'armure 63 de la deuxième couche d'armures 25 disposée au contact de la première couche d'armures 24 est par exemple égal à - α°.

Les éléments d'armure 63 sont par exemple formés par des fils métalliques, notamment des fils en acier, ou par des rubans en matériau composite, par exemple des rubans renforcés de fibres de carbone.

Le matériau métallique formant les éléments d'armure 28 est choisi parmi un acier au carbone, notamment choisi parmi les grades d'acier au carbone comprenant entre 0,1 % et 0,8% de carbone. Lors des applications en milieu particulièrement corrosif, le matériau métallique est choisi parmi les aciers inoxydables tels que les aciers duplex.

Dans cet exemple, chaque couche d'armures de traction 24, 25 repose avantageusement sur au moins une bande anti-usure (non représentée). La bande anti-usure est par exemple réalisée en plastique, notamment à base d'un polyamide ou d'un polyfluorure de vinylidène (PVDF). Elle présente une épaisseur inférieure à l'épaisseur de chaque gaine.

Avantageusement, un ruban de maintien tel qu'une bande en aramide à résistance mécanique élevée (Technora^{®} ou Kevlar^{®}) est enroulé autour de la deuxième couche d'armures de traction 25 la plus à l'extérieur par rapport à l'axe A-A', pour assurer un maintien mécanique des couches d'armures de traction 24, 25. Alternativement, les fibres d'aramide sont remplacées par des fibres de verre ou des fibres de carbone.

La gaine externe 30 est destinée à empêcher la perméation de fluide depuis l'extérieur de la conduite flexible 10 vers l'intérieur. Elle est avantageusement réalisée en matériau polymère, notamment à base d'un polyoléfine, tel que du polyéthylène, ou à base d'un polyamide, tel que du PA11 ou du PA12

L'épaisseur de la gaine externe 30 est par exemple comprise entre 5 mm et 15 mm.

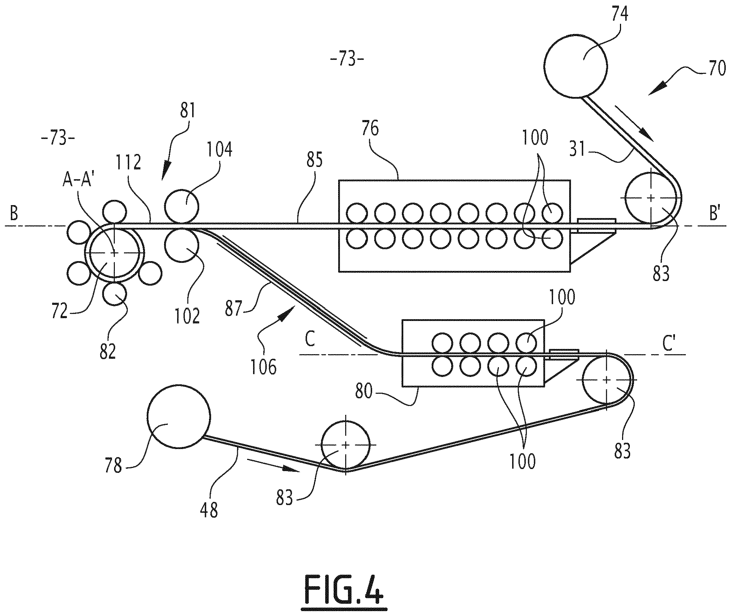

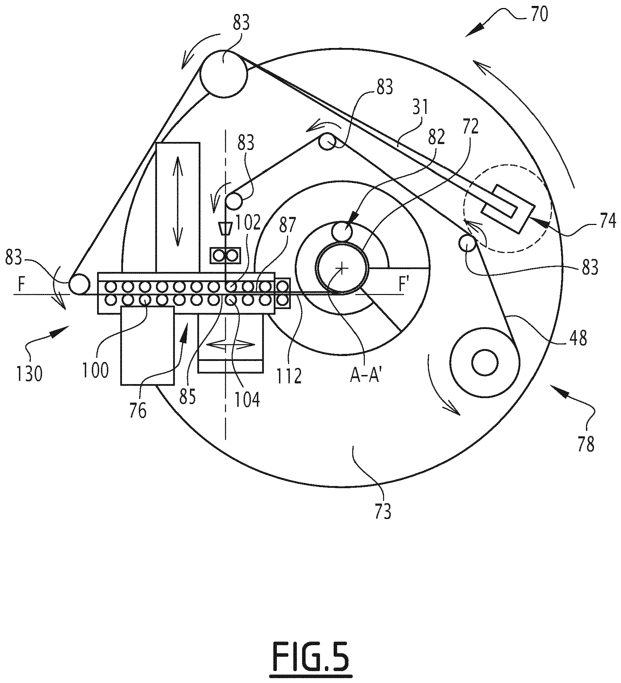

La carcasse 26 et l'insert 28 sont fabriqués et sont mis en place simultanément dans un poste 70 de fabrication et de pose, dont des exemples sont illustrés schématiquement respectivement par les figures 4 et 5.

Ces exemples correspondent aux postes de fabrication et de pose 70 décrits respectivement dans la demande de brevet WO2015/121424 et dans la demande de brevet européen n°17306920 déposée par la Demanderesse le 22 décembre 2017.

Dans l'exemple illustré sur la figure 4, conforme à la demande de brevet WO2015/121424, le poste 70 comporte un mandrin 72 rotatif autour d'un axe A-A', destiné à guider l'enroulement de la carcasse 26 et de l'insert 28.

Le poste 70 comporte un support 73 rotatif autour de l'axe A-A' et par rapport au mandrin 72, un premier dérouleur 74 (représenté schématiquement) recevant le premier feuillard 31, et une profileuse du feuillard de la carcasse 76 disposée en aval du premier dérouleur 74 entre le premier dérouleur 74 et le mandrin 72.

Le poste 70 comporte en outre un deuxième dérouleur 78 (représenté schématiquement) recevant le deuxième feuillard 48. Dans l'exemple de la figure 4, le poste 70 comporte une profileuse du feuillard de l'insert 80, disposée en aval du deuxième dérouleur 78 entre le deuxième dérouleur 78 et le mandrin 72.

Dans ce même exemple, le poste 70 comporte un système 81 de réunion des feuillards 31, 48 à leur sortie des profileuses 76, 80.

Le poste 70 comporte en outre des organes 82 de placage radial de la carcasse 26 et de l'insert 28 contre le mandrin 72, et avantageusement, des organes de renvoi 83 pour guider le premier feuillard 31 et le deuxième feuillard 48 à partir de chaque dérouleur 74, 78 vers une profileuse 76, 80 respective.

Le mandrin rotatif 72 fait saillie axialement par rapport au support 73 le long d'un axe A-A' d'enroulement.

Il présente une surface extérieure sur laquelle un premier profil 85 de carcasse, obtenu à partir du premier feuillard 31 déformé dans la profileuse de carcasse 76 et un deuxième profil 87 d'insert, obtenu à partir du deuxième feuillard 48 déformé dans la profileuse d'insert 80 sont appliqués.

Dans cet exemple, le mandrin rotatif 72 comporte en outre un ensemble de lubrification de la surface extérieure.

Le mandrin rotatif 72 est propre à être entraîné en rotation autour de l'axe A-A' avec une vitesse et un sens de rotation différents de ceux du support 73.

Avantageusement, le mandrin 72 est entraîné en rotation dans un sens opposé à celui du support 73, et avec une vitesse inférieure à 10 % de celle du support 73.

Ceci autorise un dégagement rapide de l'insert 28 formé en appui sur le corps d'appuis du mandrin 72, et évite les problèmes de grippage ou de coincement de la carcasse 26 sur le mandrin 72.

La rotation du mandrin rotatif 72 tend à augmenter localement le diamètre interne de la carcasse 26 pour favoriser son évacuation.

Le support 73 comporte par exemple un plateau entraîné en rotation autour de l'axe A-A' dans le sens d'enroulement de l'insert 28 et de la carcasse 26.

Le support 73 porte les dérouleurs 74, 78, et les profileuses 76, 80. Dans cet exemple, les profileuses 76, 80 sont disposées diamétralement du même côté par rapport à un plan axial médian passant par l'axe A-A'.

Les profileuses 76, 80 sont par exemple situées l'une sur l'autre.

Chaque profileuse 76, 80 comporte une pluralité de paires de galets 100 de déformation du feuillard 31, 48, qui définissent un axe B-B', C-C' respectif d'alimentation respectivement de la carcasse 26 et de l'insert 28 sur le mandrin 72.

Les profileuses 76, 80 sont mobiles en translation sur le support 73 dans un plan perpendiculaire à l'axe A-A' d'enroulement. La profileuse d'insert 80 est apte à être pivotée autour de son axe C-C' pour régler l'angle d'introduction du profil d'insert 87 dans le système de réunion 81.

Le système de réunion 81 comporte deux galets guides 102, 104 placés en regard de l'autre et avantageusement, un guide profil 106, interposé entre la profileuse d'insert 80 les galets guides 102,104. Le guide profil 106 comporte des moyens de guidage de l'insert 28 entre d'une part l'aval de la profileuse d'insert 80 et d'autre part les deux galets guides 102,104.

Ces moyens de guidage épousent la géométrie de l'insert 28 et comportent un ensemble de galets de guidage et/ou une ou plusieurs rampes de guidage présentant un faible coefficient de frottement.

Les organes de placage radial 82 sont disposés radialement autour de la surface extérieure du mandrin 72. Ils comportent par exemple des molettes propres à s'appliquer radialement à l'extérieur de l'insert 28 et de la carcasse 26 pour finaliser la disposition de l'insert 28 dans l'interstice hélicoïdal 40, et l'agrafage de la carcasse 26.

Dans une variante, pour faciliter le dégagement de l'insert 28 et de la carcasse 26 à l'écart du mandrin 72, les organes de placage radial 82 situé sur le mandrin 72 sont aptes à fermer uniquement partiellement la carcasse 26. Un mandrin spécifique (non représenté), associé à des organes de placage additionnel est alors prévu en aval du mandrin 72.

Un procédé de fabrication de la conduite flexible 10 dans le poste 70 de la figure 4 va maintenant être décrit. Initialement, les feuillards 31, 48 sont chargés sur les dérouleurs 74, 78.

Puis, les feuillards 31, 48 sont déroulés pour être introduits respectivement dans les profileuses 76, 80. Simultanément, le support 73 est entraîné en rotation autour de l'axe A-A'.

Dans la profileuse de carcasse 76, le premier feuillard 31 se déforme successivement pour réaliser le premier profil 85 comportant la partie intérieure 32, la partie intermédiaire 34 et la partie extérieure 36, sans refermer totalement la partie intérieure 32 et la partie extérieure 36.

En particulier, la branche intérieure du U de la partie extérieure 36 reste partiellement ouverte, de même que la branche extérieure du U de la partie intérieure 32.

Dans la profileuse d'insert 80, le deuxième feuillard 48 est déformé et plié le long d'un axe intermédiaires situé à l'écart de l'axe central du feuillard 48 pour former la région radiale 44, et la région intérieure 46. La déformation se poursuit en en incurvant des tronçons de liaison 50, 54

Un deuxième profil 87 de section en L comprenant une région intérieure 46 axiale et une région radiale 44 est alors obtenu, pour former l'insert 28.

Le deuxième profil 87 est ensuite réuni avec le premier profil 85 dans le système de réunion 81, en étant guidé vers le système de réunion 81 par le guide profil 106.

La région radiale 44 s'applique contre la partie intermédiaire 34.

La région intérieure 46 applique contre la branche intérieure du U de la partie intérieure 32.

Un profil combiné 112 est ainsi obtenu et est alimenté en « fil poussé » ou en fil tiré à travers le système de réunion 81, en étant orienté tangentiellement par rapport à la surface extérieure du mandrin 72.

Le profil combiné 112 se plaque sur la surface extérieure du mandrin 72 et s'enroule en hélice, au pas souhaité pour l'insertion dans l'interstice 40, formant ainsi l'insert 28 et la carcasse 26.

Simultanément, la partie extérieure 36 partiellement ouverte de chaque spire du premier profil 85 s'insère dans la partie intérieure 32 d'une spire adjacente.

Par ailleurs, la région intérieure 46 de chaque spire du deuxième profil 87 s'applique sur la région intérieure 46 d'une spire adjacente pour obturer l'interstice 40 en formation.

Les organes de placage radial 82 sont alors appliqués à l'extérieur de la carcasse 26 et de l'insert 28 pour refermer et agrafer la carcasse 26, tout en assurant le calage interne de l'insert 28 dans l'interstice hélicoïdal 40.

Les spires ainsi formées de la carcasse 26 et de l'insert 28 se dégagent progressivement vers l'aval, en se détachant du mandrin 72 sous l'effet de la lubrification apportée par l'ensemble de lubrification, et du différentiel de rotation entre le support 73 et le mandrin 72 tendant à gonfler la carcasse 26.

Une fois la carcasse 26 réalisée, et l'insert 28 disposé dans la carcasse 26, la gaine interne 20 est formée autour de la carcasse 26, par exemple par extrusion. La voûte de pression 27 et les couches d'armures 24, 25 sont alors enroulées autour de la gaine interne 20.

La gaine externe 30 est ensuite réalisée avantageusement par extrusion, en étant disposée à l'extérieur des couches d'armures 24, 25.

L'ensemble intérieur formé par la carcasse 26 et l'insert 28 est perméable au passage de fluide depuis l'intérieur de la carcasse 26 vers l'extérieur de la carcasse 26.

Dans une variante (non représentée) de poste 70 de fabrication et de pose, les profileuses 76, 80 sont disposées diamétralement à l'opposé l'une de l'autre, de part et d'autre d'un plan axial médian passant par l'axe A-A'.

La figure 5 illustre une autre variante de poste 70 de fabrication et de pose conforme à celle décrite dans la demande de brevet européen n°17306920 déposée par la Demanderesse le 22 décembre 2017.

Dans cet exemple, le poste 70 comporte une profileuse unique 76, destinée à profiler conjointement le premier feuillard 31 et le deuxième feuillard 48.

Le premier feuillard 31 est alimenté en amont dans la profileuse 76 pour être déformé partiellement par des galets 100 amont, sans déformation du deuxième feuillard 48. A partir de l'introduction intermédiaire du deuxième feuillard 48 non déformé, transversalement par rapport à la profileuse 76, le premier feuillard 31 et le deuxième feuillard 48 se déforment conjointement entre les galets 100 pour former un profil combiné 112 tel que décrit plus haut.

Le profil combiné 112 est ensuite enroulé sur la surface extérieure du mandrin 72, comme décrit précédemment.

## Revendications

1. Conduite flexible (10) de transport de fluide, comprenant :
- une gaine interne (20) en polymère délimitant un passage (16) de circulation de fluide d'axe central (A-A') ;
- au moins une couche d'armures (24, 25) disposée à l'extérieur de la gaine interne (20) ;
- une carcasse interne (26), propre à entrer en contact avec le fluide circulant dans la gaine de pression (20), la carcasse interne (26) étant disposée dans la gaine interne (20), la carcasse interne (26) comprenant un premier feuillard (31) plié délimitant un interstice (40) hélicoïdal débouchant vers l'axe central (A-A') ;
- un insert (28) hélicoïdal obturant vers l'intérieur l'interstice hélicoïdal (40) ;
dans lequel l'insert hélicoïdal (28) est en acier et comporte, en section dans un plan axial médian, une région extérieure radiale (44), disposée au moins en partie dans l'interstice hélicoïdal (40), et une région intérieure axiale (46) faisant saillie à partir de la région radiale (44), la région intérieure axiale (46) obturant au moins partiellement l'interstice hélicoïdal (40),
l'insert hélicoïdal (28) présentant un bord libre extérieur (51) disposé dans l'interstice hélicoïdal (40), et un bord libre intérieur (55) disposé hors de l'interstice hélicoïdal (40),
**caractérisé en ce que** la région radiale (44) comprend, en section, un tronçon linéaire (52), et un tronçon intérieur de liaison (54) recourbé, la région intérieure axiale (46) faisant saillie à partir du tronçon intérieur de liaison (54),
et **en ce que** en section dans le plan axial médian, la région intérieure axiale (46) s'étend suivant une courbe continûment dérivable depuis la région radiale (44) jusqu'au bord libre intérieur (55) de l'insert hélicoïdal (28).

2. Conduite (10) selon la revendication 1, dans laquelle le bord libre extérieur (51) et la région radiale (44) sont libres de se déplacer axialement et radialement dans l'interstice hélicoïdal (40), par rapport à la carcasse interne (26).

3. Conduite (10) selon l'une des revendications 1 ou 2, dans laquelle l'étendue radiale de la région radiale (44), prise perpendiculairement à l'axe central (A-A') est inférieure à la longueur de la région intérieure axiale (46), prise le long de l'axe central (A-A'), notamment est inférieure à 50% de la longueur de la région intérieure axiale (46), prise le long de l'axe central (A-A')

4. Conduite (10) selon l'une quelconque des revendications précédentes, dans laquelle la région radiale (44) comprend, en section, un tronçon extérieur (50) recourbé, de courbure opposée à celle du tronçon intérieur de liaison (54).

5. Conduite (10) selon la revendication 4, dans laquelle la longueur du tronçon extérieur (50) recourbé, prise en projection le long de l'axe central (A-A'), est inférieure à 20%, notamment inférieure à 10% de la longueur de la région intérieure axiale (46), prise en projection le long de l'axe central (A-A')

6. Conduite (10) selon l'une quelconque des revendications précédentes, dans laquelle la carcasse (26) comporte une pluralité de spires agrafées, l'insert hélicoïdal (28) étant apte à être désengagé de la carcasse (26) sans interférence avec l'agrafage des spires de la carcasse (26).

7. Conduite (10) selon l'une quelconque des revendications précédentes, dans laquelle chaque spire de la carcasse (26) présente une partie intérieure (32), une partie intermédiaire (34), la partie intérieure (32) présentant une forme de U replié vers la partie intermédiaire (34) et une partie extérieure (36), la partie extérieure (36) présentant une forme de U replié vers la partie intermédiaire (34).

8. Conduite (10) selon l'une quelconque des revendications précédentes, dans laquelle l'insert hélicoïdal (28) comporte une pluralité de spires, chaque spire de l'insert hélicoïdal (28) comportant une section, prise dans un plan axial médian, comportant une région intérieure axiale (46), une région radiale (44), la région intérieure axiale (46) d'une première spire étant appliquée intérieurement sur la région intérieure axiale (46) d'une deuxième spire adjacente à la première spire.

9. Conduite (10) selon l'une quelconque des revendications précédentes, dans laquelle l'insert (28) est formé d'un deuxième feuillard (48) plié.

10. Conduite (10) selon l'une quelconque des revendications précédentes, dans laquelle l'insert hélicoïdal (28) présente une section en forme générale de L, prise dans un plan axial médian.

11. Conduite (10) selon l'une quelconque des revendications précédentes, dans laquelle l'ensemble intérieur formé par la carcasse (26) et par l'insert (28) est perméable au passage du fluide depuis l'intérieur de la carcasse (26) vers l'extérieur de la carcasse (26).

12. Procédé de fabrication d'une conduite flexible (10), comprenant les étapes suivantes :
- formation d'une carcasse interne (26) propre à entrer en contact avec le fluide circulant dans la gaine de pression (20), la carcasse interne (26) comprenant un premier feuillard (31) plié délimitant un interstice hélicoïdal (40) débouchant vers l'axe central (A-A') ;
- réalisation d'une gaine interne (20) en polymère délimitant un passage (16) de circulation de fluide d'axe central (A-A'), la carcasse interne (26) étant disposée dans la gaine interne (20) ;
- disposition d'au moins une couche d'armures (24, 25) externe à l'extérieur de la gaine interne (20) ;
le procédé comportant la mise en place d'un insert (28) hélicoïdal en acier dans l'interstice hélicoïdal (40) obturant vers l'intérieur l'interstice hélicoïdal (40), l'insert hélicoïdal (28) comportant une région radiale (44), disposée au moins en partie dans l'interstice hélicoïdal (40), et une région intérieure axiale (46) faisant saillie à partir de la région radiale (44), la région intérieure axiale (46) obturant au moins partiellement l'interstice hélicoïdal (40)
le procédé comportant la disposition d'un bord libre extérieur (51) de l'insert hélicoïdal (28) dans l'interstice hélicoïdal (40), et la disposition d'un bord libre intérieur (55) de l'insert hélicoïdal (28) hors de l'interstice hélicoïdal (40)
dans lequel la région radiale (44) comprend, en section, un tronçon linéaire (52), et un tronçon intérieur de liaison (54) recourbé, la région intérieure axiale (46) faisant saillie à partir du tronçon intérieur de liaison (54),
et dans lequel en section dans le plan axial médian, la région intérieure axiale (46) s'étend suivant une courbe continûment dérivable depuis la région radiale (44) jusqu'au bord libre intérieur (55) de l'insert hélicoïdal (28).

13. Procédé selon la revendication 12, comportant le passage d'un deuxième feuillard (48) dans une profileuse d'insert (80) pour former un profil d'insert (87), le procédé comportant le passage du premier feuillard (31) dans une profileuse de carcasse (76) pour former un profil de carcasse (85) et l'enroulement du profil de carcasse (85) et du profil d'insert (87) sur un mandrin (72) ou comportant le passage du premier feuillard (31) dans une profileuse de carcasse (76) pour former un profil de carcasse (85), le passage d'un deuxième feuillard (48) dans la même profileuse de carcasse (76) pour former un profil d'insert (87) en contact avec le profil de carcasse (76), et l'enroulement du profil de carcasse (85) et du profil d'insert (87) sur un mandrin (72).

## Patentansprüche

1. Flexible Leitung (10) für Fluidtransport, umfassend:
- eine innere Hülle (20) aus Polymer, die einen Durchgang (16) für Fluidzirkulation mit einer Mittelachse (A-A') begrenzt;
- mindestens eine Bewehrungsschicht (24, 25), die außerhalb der inneren Hülle (20) angeordnet ist;
- eine innere Karkasse (26), die geeignet ist, mit dem in der Druckhülle (20) zirkulierenden Fluid in Kontakt zu kommen, wobei die innere Karkasse (26) in der inneren Hülle (20) angeordnet ist, die innere Karkasse (26) umfassend ein erstes gefaltetes Band (31), das einen schraubenförmigen Zwischenraum (40) begrenzt, der zu der Mittelachse (A-A') mündet;
- einen schraubenförmigen Einsatz (28), der den schraubenförmigen Zwischenraum (40) nach innen verschließt;
wobei der schraubenförmige Einsatz (28) aus Stahl ist und umfassend im Schnitt in einer axialen Mittelebene einen radial äußeren Bereich (44), der zumindest teilweise in dem schraubenförmigen Zwischenraum (40) angeordnet ist, und einen axialen Innenbereich (46), der von dem radialen Bereich (44) hervorsteht, wobei der axiale Innenbereich (46) den schraubenförmigen Zwischenraum (40) zumindest teilweise verschließt,
wobei der schraubenförmige Einsatz (28) einen äußeren freien Rand (51), der in dem schraubenförmigen Zwischenraum (40) angeordnet ist, und einen inneren freien Rand (55), der außerhalb des schraubenförmigen Zwischenraums (40) angeordnet ist, aufweist,
**dadurch gekennzeichnet, dass** der radiale Bereich (44) im Querschnitt einen linearen Abschnitt (52) und einen gebogenen inneren Verbindungsabschnitt (54) umfasst, wobei der axiale Innenbereich (46) von dem inneren Verbindungsabschnitt (54) hervorsteht,
und dass im Schnitt in der axialen Mittelebene der axiale Innenbereich (46) sich entlang einer kontinuierlich ableitbaren Kurve von dem radialen Bereich (44) zu dem inneren freien Rand (55) des schraubenförmigen Einsatzes (28) erstreckt.

2. Leitung (10) nach Anspruch 1, wobei sich der äußere freie Rand (51) und der radiale Bereich (44) in dem schraubenförmigen Zwischenraum (40) in Bezug auf die innere Karkasse (26) axial und radial frei bewegen können.

3. Leitung (10) nach einem der Ansprüche 1 oder 2, wobei die radiale Ausdehnung des radialen Bereichs (44), senkrecht zu der Mittelachse (A-A') betrachtet, kleiner ist als die Länge des axialen Innenbereichs (46), längs der Mittelachse (A-A') betrachtet, insbesondere weniger als 50 % der Länge des axialen Innenbereichs (46) entlang der Mittelachse (A-A'), ist.

4. Leitung (10) nach einem der vorherigen Ansprüche, wobei der radiale Bereich (44) im Querschnitt einen gebogenen Außenabschnitt (50) mit einer Krümmung entgegengesetzt zu der des inneren Verbindungsabschnitts (54) umfasst.

5. Leitung (10) nach Anspruch 4, wobei die Länge des gebogenen Außenabschnitts (50), projiziert entlang der Mittelachse (A-A'), weniger als 20 %, insbesondere weniger als 10 % der Länge des axialen Innenbereichs (46), projiziert entlang der Mittelachse (A-A'), ist.

6. Leitung (10) nach einem der vorherigen Ansprüche, wobei die Karkasse (26) eine Vielzahl von zusammengehefteten Windungen umfasst, wobei der spiralförmige Einsatz (28) geeignet ist, um von der Karkasse (26) gelöst zu werden, ohne die Verklammerung der Windungen der Karkasse (26) zu beeinträchtigen.

7. Leitung (10) nach einem der vorherigen Ansprüche, wobei jede Windung der Karkasse (26) einen Innenabschnitt (32), einen mittleren Abschnitt (34), wobei der Innenabschnitt (32) eine U-Form aufweist, die in Richtung des mittleren Abschnitts (34) umgebogen ist, und einen äußeren Abschnitt (36) aufweist, wobei der äußere Abschnitt (36) eine U-Form aufweist, die in Richtung des mittleren Abschnitts (34) umgebogen ist.

8. Leitung (10) nach einem der vorherigen Ansprüche, wobei der schraubenförmige Einsatz (28) eine Vielzahl von Windungen umfasst, jede Windung des schraubenförmigen Einsatzes (28) umfassend einen in einer axialen Mittelebene genommenen Abschnitt umfassend einen inneren axialen Bereich (46), einen radialen Bereich (44), wobei der axiale innere Bereich (46) einer ersten Windung innen an den axialen Innenbereich (46) einer zweiten Windung angrenzend an die erste Windung angelegt ist.

9. Leitung (10) nach einem der vorherigen Ansprüche, wobei der Einsatz (28) aus einem zweiten gefalteten Band (48) gebildet ist.

10. Leitung (10) nach einem der vorherigen Ansprüche, wobei der schraubenförmige Einsatz (28) genommen in einer axialen Mittelebene einen allgemein L-förmigen Querschnitt aufweist.

11. Leitung (10) nach einem der vorherigen Ansprüche, wobei die innere Anordnung, die durch die Karkasse (26) und den Einsatz (28) gebildet ist, für den Durchgang von Fluid aus dem Inneren der Karkasse (26) nach außerhalb der Karkasse (26) durchlässig ist.

12. Verfahren zur Herstellung einer flexiblen Leitung (10), umfassend die folgenden Schritte:
- Bilden einer inneren Karkasse (26), die geeignet ist, um mit dem in der Druckhülle (20) zirkulierenden Fluid in Kontakt zu kommen, die innere Karkasse (26) umfassend ein erstes gefaltetes Band (31), das einen schraubenförmigen Zwischenraum (40) begrenzt, der zu der Mittelachse (A-A') mündet.
- Herstellen einer inneren Hülle (20) aus Polymer, die einen Fluidzirkulationsdurchgang (16) mit einer Mittelachse (A-A') begrenzt, wobei die innere Karkasse (26) in der inneren Hülle (20) angeordnet ist;
- Anordnen mindestens einer Bewehrungsschicht (24, 25) außerhalb der Außenseite der inneren Hülle (20);
das Verfahren umfassend das Einsetzen eines spiralförmigen Stahleinsatzes (28) in den spiralförmigen Zwischenraum (40), der den spiralförmigen Zwischenraum (40) nach innen verschließt, der schraubenförmige Einsatz (28) umfassend einen radialen Bereich (44) auf, der mindestens teilweise in dem schraubenförmigen Zwischenraum (40) angeordnet ist und einen axialen Innenbereich (46), der von dem radialen Bereich (44) hervorsteht, wobei der axiale Innenbereich (46) den schraubenförmigen Zwischenraum (40) zumindest teilweise verschließt,
das Verfahren umfassend das Anordnen eines äußeren freien Rands (51) des schraubenförmigen Einsatzes (28) in dem schraubenförmigen Zwischenraum (40) und das Anordnen eines inneren freien Rand (55) des schraubenförmigen Einsatzes (28) außerhalb des schraubenförmigen Zwischenraums (40),
wobei der radiale Bereich (44) im Querschnitt einen linearen Abschnitt (52) und einen gebogenen inneren Verbindungsabschnitt (54) umfasst, wobei der innere axiale Bereich (46) von dem inneren Verbindungsabschnitt (54) hervorsteht,
und wobei sich der innere axiale Bereich (46) im Schnitt in der axialen Mittelebene entlang einer kontinuierlich ableitbaren Kurve von dem radialen Bereich (44) zu dem inneren freien Rand (55) des schraubenförmigen Einsatzes (28) erstreckt.

13. Verfahren nach Anspruch 12, umfassend den Durchgang eines zweiten Bandes (48) in einem Einsatzprofilierer (80), um ein Einsatzprofil (87) zu bilden, das Verfahren umfassend den Durchgang des ersten Bands (31) durch einen Karkassenprofilierer (76) zum Bilden eines Karkassenprofils (85) und das Aufwickeln des Karkassenprofils (85) und des Einsatzprofils (87) auf einen Dorn (72), oder umfassend den Durchgang des ersten Bands (31) durch einen Karkassenprofilierer (76) zum Bilden eines Karkassenprofils (85), den Durchgang eines zweiten Bands (48) durch denselben Karkassenprofilierer (76) zum Bilden eines Einsatzprofil (87) in Kontakt mit dem Karkassenprofil (76) und Aufwickeln des Karkassenprofils (85) und des Einsatzprofils (87) auf einen Dorn (72).

## Claims

1. A flexible pipe (10) for transporting a fluid, comprising:
- an inner sheath (20) made of polymer, delimiting a fluid circulation passage (16) having a central axis (A-A');
- at least one layer of armour (24, 25) arranged outside the inner sheath (20);
- an inner frame (26), suitable for coming into contact with the fluid circulating in the pressure sheath (20), the inner frame (26) being arranged in the internal sheath (20), the inner frame (26) comprising a first folded strip (31) delimiting a helical gap (40) opening out towards the central axis (A-A');
- a helical insert (28) closing the helical gap (40) towards the inside;
wherein the helical insert (28) is made of steel and comprises, in section in a median axial plane, a radial outer region (44), arranged at least partly in the helical gap (40), and an axial inner region (46) projecting from the radial region (44), the axial inner region (46) at least partially closing the helical gap (40),
the helical insert (28) having an outer free edge (51) arranged in the helical gap (40), and an inner free edge (55) arranged outside the helical gap (40),
**characterised in that** the radial region (44) comprises, in cross-section, a linear section (52), and a curved inner connecting section (54), the axial inner region (46) projecting from the inner connecting section (54),
and **in that**, in cross-section in the median axial plane, the axial inner region (46) extends along a continuously differentiable curve from the radial region (44) to the interior free edge (55) of the helical insert (28).

2. The pipe (10) as claimed in claim 1, wherein the outer free edge (51) and the radial region (44) are free to move axially and radially in the helical gap (40), relative to the inner casing (26).

3. The pipe (10) according to one of claims 1 or 2, wherein the radial extent of the radial region (44), taken perpendicularly to the central axis (A-A'), is less than the length of the axial inner region (46), taken along the central axis (A-A'), in particular is less than 50% of the length of the axial inner region (46), taken along the central axis (A-A').

4. The pipe (10) according to any one of the preceding claims, wherein the radial region (44) comprises, in cross-section, a curved outer section (50), the curvature of which is opposite to that of the inner connecting section (54).

5. The pipe (10) according to claim 4, wherein the length of the curved outer section (50), taken as a projection along the central axis (A-A'), is less than 20%, in particular less than 10%, of the length of the axial inner region (46), taken as a projection along the central axis (A-A')

6. The pipe (10) according to any one of the preceding claims, wherein the frame (26) comprises a plurality of stapled turns, the helical insert (28) being able to be disengaged from the frame (26) without interfering with the stapling of the turns of the frame (26).

7. The pipe (10) according to any one of the preceding claims, wherein each turn of the frame (26) has an inner portion (32), an intermediate portion (34), the inner portion (32) having a U-shape bent towards the intermediate portion (34) and an outer portion (36), the outer portion (36) having a U-shape bent towards the intermediate portion (34).

8. The pipe (10) according to any one of the preceding claims, wherein the helical insert (28) comprises a plurality of turns, each turn of the helical insert (28) having a cross-section, taken in a median axial plane, comprising an axial inner region (46), a radial region (44), the axial inner region (46) of a first turn being inwardly applied to the axial inner region (46) of a second turn adjacent to the first turn.

9. The pipe (10) according to any of the preceding claims, wherein the insert (28) is formed from a second folded strip (48).

10. The pipe (10) according to any one of the preceding claims, wherein the helical insert (28) has a generally L-shaped cross-section, taken in a median axial plane.

11. The pipe (10) according to any one of the preceding claims, wherein the inner assembly formed by the frame (26) and by the insert (28) is permeable to the passage of fluid from the inside of the frame (26) to the outside of the frame (26).

12. A method for manufacturing a flexible pipe (10), comprising the following steps:
- forming an inner frame (26) suitable for coming into contact with the fluid circulating in the pressure sheath (20), the inner frame (26) comprising a first folded strip (31) delimiting a helical gap (40) opening out towards the central axis (A-A') 5
- producing an inner sheath (20) made of polymer, delimiting a fluid circulation passage (16) having a central axis (A-A'), the inner frame (26) being arranged in the inner sheath (20);
- arranging at least one layer of armour (24, 25) outside the inner sheath (20);
the method comprising placing a helical insert (28) made of steel in the helical gap (40) closing the helical gap (40) inwardly, the helical insert (28) comprising a radial region (44), arranged at least partly in the helical gap (40), and an axial inner region (46) projecting from the radial region (44), the axial inner region (46) at least partially sealing the helical gap (40)
the method comprising arranging an outer free edge (51) of the helical insert (28) within the helical gap (40), and arranging an inner free edge (55) of the helical insert (28) outside the helical gap (40)
wherein the radial region (44) comprises, in cross-section, a linear section (52), and a curved inner connecting section (54), the axial inner region (46) projecting from the inner connecting section (54),
and wherein, in the median axial plane, the axial inner region (46) extends along a continuously differentiable curve from the radial region (44) to the interior free edge (55) of the helical insert (28).

13. The method according to claim 12, comprising passing a second strip (48) through an insert profiler (80) to form an insert profile (87), the method comprising passing the first strip (31) through a frame profiler (76) to form a frame profile (85) and winding the frame profile (85) and the insert profile (87) on a mandrel (72) or comprising passing the first strip (31) through a frame profiler (76) to form a frame profile (85), passing a second strip (48) through the same frame profiler (76) to form an insert profile (87) in contact with the frame profile (76), and winding the frame profile (85) and the insert profile (87) onto a mandrel (72).
